# EUROPEAN PATENT SPECIFICATION

(11) **EP 4 109 828 B1**
(45) Date of publication and mention of the grant of the patent: **31.01.2024**
(21) Application number: 21305871.2
(22) Date of filing: 24.06.2021
(51) Int. Cl.: H04L 61/4511, H04L 9/40

(54) **METHOD FOR COMMUNICATING WITH A REMOTE DNS SERVER**
VERFAHREN ZUR KOMMUNIKATION MIT EINEM ENTFERNTEN DNS-SERVER
PROCÉDÉ DE COMMUNICATION AVEC UN SERVEUR DNS DISTANT

(43) Date of publication of application: 28.12.2022
(73) Proprietor: IDEMIA France, 92400 Courbevoie (FR)
(72) Inventor: PURBA, Jan Warren, 92400 COURBEVOIE (FR)
(74) Representative: Barreau, Cédric

(56) References cited:
- GSM ASSOCIATION, GSM ASSOCIATION, GSMA FLOOR2 THE WALBROOK BUILDING 25 WALLBROOK LONDON, UK, 14 July 2020 (2020-07-14), XP040720650,
- DECCIO CASEY ET AL: "A Quantitative Study of the Deployment of DNS Rate Limiting", 2019 INTERNATIONAL CONFERENCE ON COMPUTING, NETWORKING AND COMMUNICATIONS (ICNC), IEEE, 18 February 2019 (2019-02-18), pages 442-447, XP033536520, DOI: 10.1109/ICCNC.2019.8685601 [retrieved on 2019-04-08]
- HU L ZHU J HEIDEMANN USC/ISI A MANKIN INDEPENDENT D WESSELS VERISIGN LABS P HOFFMAN ICANN Z: "Specification for DNS over Transport Layer Security (TLS); rfc7858.txt", SPECIFICATION FOR DNS OVER TRANSPORT LAYER SECURITY (TLS); RFC7858.TXT, INTERNET ENGINEERING TASK FORCE, IETF; STANDARD, INTERNET SOCIETY (ISOC) 4, RUE DES FALAISES CH- 1205 GENEVA, SWITZERLAND, 18 May 2016 (2016-05-18), pages 1-19, XP015112863, [retrieved on 2016-05-18]

## Description

### BACKGROUND OF THE INVENTION

The present invention relates to DNS resolvers, and more specifically to secure DNS resolvers for smart cards.

The DNS (for "Domain Name System") is an Internet protocol that aims to ensure the translation between Internet domain names and corresponding information, such as IP (for "Internet Protocol") addresses. Such translation is commonly referred to as "DNS resolution". DNS works according to the client-server model, and the client side of the DNS is commonly referred to as "DNS resolver". A DNS resolver is configured to initiate and sequence queries that lead to the resolution of the information sought, e.g. translating a domain name into a corresponding IP address.

DNS generally uses the User Datagram Protocol (UDP) as the default transport protocol, on the dedicated port number 53. Therefore, a DNS query usually consists in a UDP request from the client, followed by an answer from the server. When the length of the answer exceeds a predefined size (512 octets or another value if both client and server support the Extension mechanisms for DNS, EDNS), the query may be sent again using the Transmission Control Protocol (TCP). Alternatively, TCP may be exclusively used for all queries and responses.

Until relatively recently, all Internet DNS queries were sent in a non-secure manner, which made them vulnerable to eavesdropping by an attacker with access to the communication channel and therefore subject to manipulation of DNS data by man-in-the-middle attacks. In particular, such non-secure DNS communications can be subject to DNS hijacking or DNS cache poisoning. There are solutions of the prior art to secure Internet DNS queries. In particular, DNS over TLS (DoT), standardized in IETF RFC 7858, is a protocol aimed at encrypting DNS queries and responses via the Transport Layer Security (TLS) protocol. A secure tunnel is thus established between the client and the DNS server to exchange data. More specifically, a TCP connection is established on a dedicated port of the server (port number 853 by default, but other ports may be used) between the DNS client and the DNS server, which then negotiate a TLS session to secure the channel.

Originally designed for the Internet, DNS has been extended to the field of smart cards. For instance, the GSMA "Remote Provisioning Architecture for Embedded UICC" Technical Specification, Version 4.2 released on July 7, 2020, provides technical information on DNS resolution for Embedded UICC (eUICC - embedded Universal Integrated Circuit Card) for retrieving the IP address(es) of the SM-SR server (Subscription Manager Secure Routing). According to this specification, the protocol used for establishing a connection between the DNS client (i.e. the DNS resolver of the eUICC) and the DNS server (i.e. the DNS resolver of the SM-SR server) is UDP. Once the UDP channel is established, the eUICC sends a DNS query to the DNS server. Then, the DNS server processes this query, retrieves the IP address(es) of the SM-SR server, and sends to the eUICC a response including the resolved IP address(es) of the SM-SR server.

However, none of these DNS queries and responses are secured. According to the standard, all DNS communications for a eUICC DNS resolver are carried on a UDP non-secure channel and are therefore subject to eavesdropping and DNS hijacking.

Document DECCIO ET AL: "A Quantitative Study of the Deployment of DNS Rate Limiting", 2019 INTERNATIONAL CONFERENCE ON COMPUTING, NETWORKING AND COMMUNICATIONS (ICNC), IEEE, 18 February 2019, pages 442-447, XP033536520 discloses DNS rate limiting.

It is not immediate to adapt secure DNS solutions originally developed for the Internet to a DNS system for a smart card. Indeed, smart card, have very specific constraints which do not arise in the context of the Internet. In particular, smart cards have limited energy and memory resources. Therefore, DNS resolution must be performed with low power consumption and low memory footprint.

There is thus a need for a secure DNS resolver for a smart card, e.g. a SIM card (for Subscriber Identity Module card) or a UICC, embedded or not, which respects these specific constraints.

### SUMMARY OF THE INVENTION

A first aspect of the invention relates to a method performed at a terminal for communicating with a remote Domain Name System (DNS) server, wherein a secure connection is established between a secure element of the terminal and the remote DNS server, wherein the secure connection is associated with a counter representative of a number of DNS queries already processed during the secure connection. The method may comprise:
as long as the value of the counter is less than or equal to a threshold, iteratively performing:
receiving a DNS resolution triggering request;
upon receiving the resolution triggering request, sending a ciphered DNS request to the remote DNS server via the secure connection;
receiving, from the remote DNS server, a ciphered DNS response in response to the sent DNS request via the secure connection;
processing the ciphered DNS response received;
increasing the value of the counter;
and when the value of the counter is greater than the threshold, closing the secure connection.

By "secure connection", it is meant a communication link secured by security protocols, e.g. cryptographic protocols. By "receiving a DNS resolution triggering request", it is meant any determination, at the terminal, that a DNS resolution is needed. According to embodiments, this determination may be performed by the Secure Element of the terminal. Typically, the Secure Element may determine that a DNS resolution is needed when a HTTPs session has to be opened.

The processing of the ciphered DNS response may comprise deciphering, authenticating and parsing the response, e.g. by extracting from the payload of the message the IP address requested. The processing of the ciphered DNS response may comprise other actions, e.g. storing the retrieved IP address and/or constructing the subsequent HTTP request.

According to the above method, the DNS queries (a DNS query schematically comprising a DNS request and a DNS response) are advantageously secure, whereas they were not so far. In addition, this securing of DNS queries may advantageously use mechanisms similar to existing mechanisms for securing HTTP requests in the context of UICCs (e.g. secure HTTP sessions based on TLS-PSK cipher suites, as described in the GlobalPlatform specification "Remote Application Management over HTTP - Amendment B v1.1.3"). Thus, most OS and servers are already configured to support the required configurations, and can easily implement the above DNS resolving method.

Furthermore, the above method makes it possible to process several DNS queries in the same secure DNS session (a secure DNS session corresponding to one secure connection between the SE and the DNS server). In other words, the secure DNS session is not closed each time a request is processed. It can be suspended, and reopened for a later request. Therefore, the power consumption of the Secure Element is reduced.

The secure DNS session may be, for instance, a DNS-over-TLS session.

In one or several embodiments, the secure element may be a universal integrated circuit card, UICC, or an embedded UICC, eUICC.

Other types of secure elements are possible, such as SIM, embedded SIM (eSIM) or integrated SIM (iSIM).

In one or several embodiments, the secure connection may be established on a Transmission Control Protocol, TCP, channel between the terminal and the remote DNS server.

The bearer independent protocol (BIP) may further be used for interfacing the Secure Element and the terminal, to provide the Secure Element with an access to the data bearers supported by the terminal and the network.

In one or several embodiments, the secure connection may be secured by dedicated cryptographic protocols, and the dedicated cryptographic protocols may comprise Transport Layer Security pre-shared key, TLS-PSK, cipher suites.

By cryptographic protocol, it is meant a set of functions and parameters used to secure one communication link. By "dedicated", it is meant cryptographic protocols used specifically for one current secure DNS session.

This is actually similar to the standard implementation of secure HTTP sessions in UICC, as described in the GlobalPlatform specification "Remote Application Management over HTTP - Amendment B v1.1.3".

According to embodiments, the secure connection may be secured by dedicated cryptographic protocols, and the ciphered DNS request and the ciphered DNS response may be ciphered by keys derived from the dedicated cryptographic protocols.

According to embodiments, the secure connection may be established upon receiving an initial DNS resolution triggering request. This initial DNS resolution triggering request may therefore trigger the establishment of the secure connection between the secure element and the DNS server.

According to embodiments, the secure connection may be secured by dedicated cryptographic protocols, and the secure connection between the secure element and the remote DNS server may be associated with a DNS security context currently stored in a Random-access memory, RAM, of the secure element.

By "DNS security context" it is meant a set of parameters related to the secure connection between the secure element and the remote DNS server and allowing allowing said connection to be established. The DNS security context may comprise, for instance and not limited to, keys derived from the dedicated cryptographic protocols to be used for ciphering the DNS requests and the DNS responses, session identifiers, client / server random values ( correspond to TLS exchanged values), ... Parameters of the DNS security context may be further used in for resuming the session. Examples of embodiments of TLS resumption and associated set of parameters may be found for example in IETF RFC 5077 and IETF RFC 8446.

By "currently stored in the RAM", it is meant that the parameters of the DNS security context are stored in the RAM when the connection is established, and until they are cleared and/or moved to another memory, as detailed hereinafter.

In one or several embodiments, for at least one received DNS resolution triggering request, the method may further comprise:
after processing the ciphered DNS response corresponding to the at least one received DNS resolution triggering request, storing a copy of the DNS security context in a non-volatile memory, NVM, and clearing the DNS security context from the RAM.

By clearing it is meant an action (for instance by using a command) of deleting or removing data, e.g. parameters (for instance parameters related to the DNS security context) from a memory (for instance RAM or NVM), which implies that all said parameters (or more generally said data) become not accessible and/or not usable in the memory where they were before the clearing action.

Therefore, when the secure DNS session in suspended (e.g. to process an HTTPs request, which requires establishing a new secure connection dedicated to HTTPs session between the Secure Element and the Remote Administration Server and saving in RAM a new DNS security context associated with this new connection), the associated DNS security context is not anymore stored in the RAM. The RAM resources are therefore preserved.

In addition, the NVM may be external to the secure element.

In one or several embodiments, the method may further comprise:
upon receiving a subsequent DNS resolution triggering request, copying the DNS security context from the NVM to the RAM, and sending the ciphered DNS request to the remote DNS server via the secure connection based on the copied DNS security context of the RAM.

Therefore, when the secure connection is suspended (after having processed a DNS query), the DNS security context may be copied in NVM and cleared from RAM. Then, when a new DNS resolution is needed, the DNS security context may be copied in RAM to be used for resuming the previous secure DNS session. After the secure DNS session resumption, a new DNS query may be processed on the same secure DNS session (if the counter value does not exceed the threshold).

In one or several embodiments, one of the DNS resolution triggering requests may be part of a request to open an HTTPs session.

Indeed, when an HTTPs (or HTTP) session needs to be opened, DNS resolution may be necessary, e.g. to retrieve the IP address of the SM-SR server. Therefore, upon receiving a request for opening an HTTPs session, the SE may determine that DNS resolution is needed. This determination may be performed based on reception of push SMS (PUSH mode) or on an internal event (PULL mode). These two modes allow the triggering of a HTTPs session as defined in GlobalPlatform specification "Remote Application Management over HTTP - Amendment B v1.1.3".

In these embodiments, the ciphered DNS request may be a request to retrieve an IP address of a Remote Administration Server (RAS) to be used to open the HTTPs session.

The RAS may be, for example, the SM-SR server.

In addition, if the secure connection between the secure element of the terminal and the remote DNS server is called first secure connection, the method may further comprise:
establishing a secure connection, called second secure connection, between the secure element and the Remote Administration Server;
sending a ciphered HTTPs request to the Remote Administration Server via the second secure connection;
receiving, from the Remote Administration Server, a ciphered HTTPs response in response to the sent ciphered HTTPs request via the secure channel;
processing the ciphered HTTPs response received; and
after processing the ciphered HTTPs response, closing the second secure connection.

The processing of the ciphered HTTPs response may comprise deciphering, authenticating and parsing the response, e.g. by executing the commands extracted from the payload of the HTTPs response.

The second secure connection may be closed for instance when there is no data to process in the payload (upon receiving a HTTP status code issued by the server equal to 204 "No content", indicating that the server successfully processed the request and is not returning any content).

In these embodiments, if a copy of the DNS security context is stored in the NVM and the DNS security context is cleared from the RAM when the increased value of the counter is less than the threshold value, establishing the second secure connection may be performed after clearing the DNS security context from the RAM.

In other words, the first secure connection (for DNS queries) may be first suspended and the DNS security context cleared from the RAM, and then the second secure connection (for HTTPs request) is opened. Therefore, there is always at most one security context (DNS or HTTPs) stored in the RAM.

Another aspect of the invention relates to a terminal comprising a secure element, the secure element being configured for establishing a secure connection with external remote Domain Name System server, DNS server. The secure connection may be associated with a counter representative of a number of DNS queries already processed during the secure connection, and the terminal may be configured for:
as long as the value of the counter is less than or equal to a threshold, iteratively performing:
   receiving a DNS resolution triggering request;
   upon receiving the resolution triggering request, sending a ciphered DNS request to the remote DNS server via the secure connection;
   receiving, from the remote DNS server, a ciphered DNS response in response to the sent DNS request via the secure connection;
   processing the ciphered DNS response received;
   increasing the value of the counter;
and when the value of the counter is greater than the threshold, closing the secure connection.

Yet another aspect of the invention relates to a non-transitory computer readable storage medium, having stored thereon a computer program comprising program instructions, the computer program being loadable into a data-processing unit and adapted to cause the data-processing unit to carry out each of the steps of any of the above methods when the computer program is run by the data-processing device.

Other features and advantages of the method and apparatus disclosed herein will become apparent from the following description of non-limiting embodiments, with reference to the appended drawings.

### BRIEF DESCRIPTION OF THE DRAWINGS

The present invention is illustrated by way of example, and not by way of limitation, in the figures of the accompanying drawings, in which like reference numerals refer to similar elements and in which:
- Figures 1a and 1b represent examples of architecture of a device in which embodiments of the invention may be implemented;
- Figure 2 represents an example of a sequence flow of notifications for a secured DNS resolution according to one or several embodiments of the invention;
- Figure 3 represents an example of a sequence flow of notifications over HTTPs in one or several embodiments of the invention;
- Figure 4 is a flow chart describing a data update in one or several embodiments of the invention.

### DESCRIPTION OF PREFERRED EMBODIMENTS

An aim of the invention is to provide a DNS resolution method adapted to the specific constraints of smart cards. There are solutions of the prior art to open secure HTTP sessions between a UICC and a Remote Administration Server (RAS), such as the Subscription Manager Secure Routing, SM-SR server. For instance, the GlobalPlatform specification "Remote Application Management over HTTP - Amendment B v1.1.3" describes how to use Pre-Shared Key Transport Layer Security (PSK-TLS, or TLS-PSK) cipher suites to secure the HTTP communications between the UICC and the RAS. Conventionally, a new secure channel is opened for each new HTTPs request, and this channel is closed after processing of the request. However, securing DNS requests, in particular to retrieve the IP address of the RAS is never discussed. The invention proposes to use another set of cryptographic keys (for example other PSK-TLS cipher suites) to secure communications between the UICC and a DNS server. The proposed method advantageously makes it possible to reduce power consumption by reusing the same secure channel for several DNS requests, thus avoiding repeating the steps of establishing the channel and performing a session handshake for each DNS request. In addition, certain embodiments make it possible to considerably reduce memory resources, in particular in the RAM of the UICC (or any other secure element of the device).

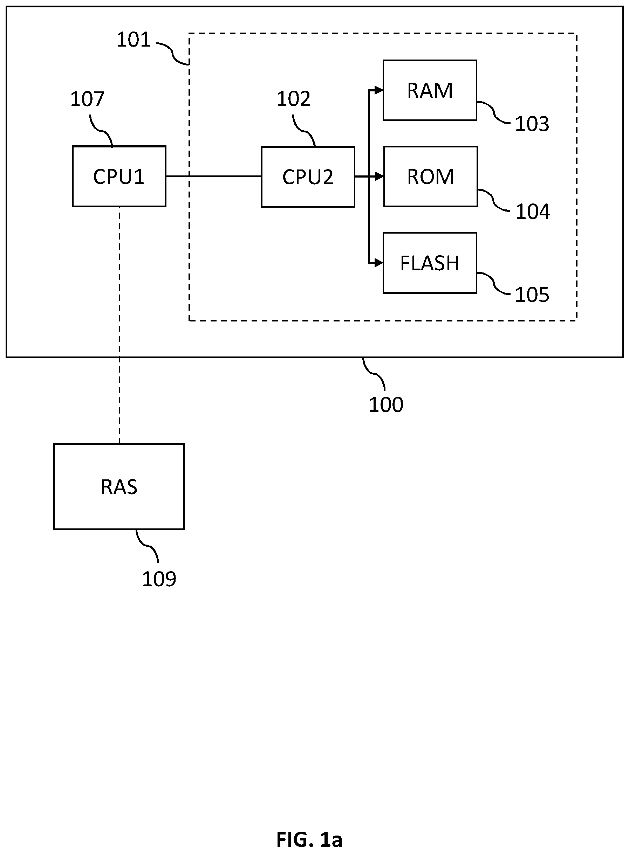

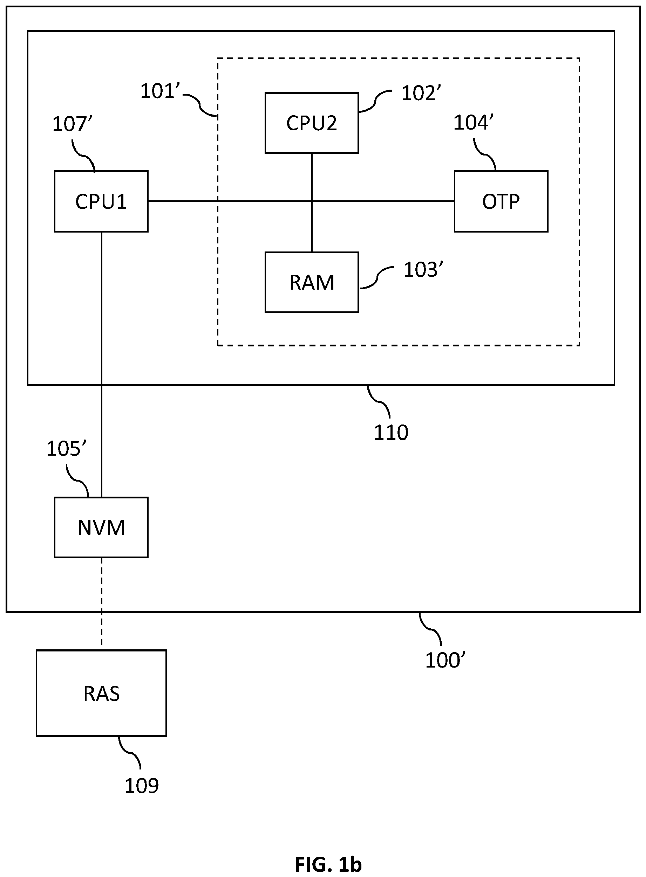

Figures 1a and 1b represent examples of architecture of a terminal (100, 100') in which embodiments of the invention may be implemented.

The terminal 100, 100' may be any type of computer, such as a personal computer, a mobile data terminal or a mobile device, e.g. a smartphone, a tablet, a personal digital assistant, etc. In the example of Figure 1a, the terminal 100 comprises a secure element (SE) 101 and a Central Processing Unit 1 (CPU1) 107, external to the SE 101. The SE may be, for instance, a Universal Subscriber Identity Module (UICC), a Subscriber Identification Module (SIM), an embedded UICC (eUICC), an embedded SIM (eSIM), an integrated SIM (iSIM) or any other type of secure element.

The secure element 101 may comprise the following components, which may be for example connected by a communication bus:
- a Central Processing Unit 2 (CPU2) 102 implementing a secure operating system (OS). According to embodiments, this CPU2 102 may operate in secure mode only, or according to several modes (secure and not secure). According to embodiments, the CPU2 102 of the SE 101 may be configured to send instructions to the external CPU1 107;
- a non-volatile, rewritable memory 105, which can be configured as a flash memory for instance and which may store a DNS client application (also referred to as DNS resolver);
- a rewritable Random Access Memory (RAM) 103 which may comprise registers suitable for recording variables and parameters created and modified during the execution of the aforementioned program. During implementations of the invention, the program instruction codes stored in the flash memory may be loaded into RAM 103 to be executed by the CPU 102 of the SE 101;
- a non-volatile, non-rewritable Read-Only Memory (ROM) 104 configured to store at least parts of an the OS of the SE; and
- a communication interface (not represented) adapted to transmit and receive data from and to the terminal 100. In one or several embodiments, the communication interface may be a contact-based data communication interface, for instance according to ISO 7816.

The terminal 100 may further comprise a communication interface (not represented) to communicate with a remote server 109, which may be according to embodiments a DNS server or a Remote Administration Server (RAS), for instance a SM-SR server.

In the example of Figure 1b, the terminal 100' comprises a system on a chip (SOC) 110 and a rewritable Non-Volatile Memory (NVM) 105', the SOC 110 being connected to the rewritable NVM 105'. The NVM 105' is, in this example, external to the SOC 110. Other architectures are possible.

The rewritable NVM 105' may typically be mass storage such as a flash memory. This NVM 105' may constitute a medium within the meaning of the invention, that is to say it may include a computer program comprising instructions for implementing a method according to the invention. The program may then be loaded into a Random Access Memory (RAM) 103' during the boot of the SOC 110.

In this example of Figure 1b, the SOC 110 comprises a first CPU1 107' and a secure element (SE) 101'. The first CPU1 107' and the SE 101' may communicate for example via a communication interface (not represented), which may for example comprise a Direct Memory Access (DMA) module or a mailbox.

The secure element 101' comprises the following components, which may be for example connected by a communication bus:
- a CPU2 102' implementing a secure operating system (OS). According to embodiments, this CPU2 102' may operate in secure mode only, or according to several modes (secure and not secure). According to embodiments, the CPU2 102' of the SE 101' may be configured to send instructions to the first CPU1 107' or to a memory controller (on the SOC or connected to it) controlling the NVM 105';
- a non-volatile non-reversible memory 104', for example an OTP memory;
- a Random Access Memory (RAM) 103' which may comprise registers suitable for recording variables and parameters created and modified during the execution of the aforementioned program. During implementations of the invention, the program instruction codes stored in NVM 105' may be loaded into RAM 103' to be executed by the CPU2 102' of the SE 101'; and
- a communication interface (not represented) adapted to transmit and receive data, for example to / from the NVM 105' via the first CPU1 107'.

A communication bus may allow communication and interoperability between the various components 102', 103', 104' of the SE 101' or linked to it (e.g. the first CPU1 107' and the NVM 105'). The representation of the bus is not restrictive and, in particular, the CPU2 102' of the SE 101' may be configured to communicate instructions to any component 103', 104' of the SE 101' directly or through another component of this secure element 101'.

It is noted that in the example of Figure 1b, the CPU2 102' of the SE 101' transmits its instructions to the first CPU1 107', which transfers them to the NVM 105' via a communication bus. Alternatively, the first CPU1 107' may be replaced by a memory controller external to the SOC 110, to which the CPU2 102' of the SE 101' may directly send its instructions / commands.

Typically, the OS of the CPU2 102' of the SE 101' may use objects as memory containers. In a known manner, an object is a block of bits comprising a header and data (payload). The header usually indicates the size of the data while the payload comprises information used either by an application running on the OS or by the OS itself. The OS may use these objects for its own needs, or for object-oriented applications using a virtual machine. The OS generally accesses the object by an address or an identifier which redirects to an address.

The terminal 100' may further comprise a communication interface (not represented) to communicate with a remote server 109, which may be according to embodiments a DNS server or a Remote Administration Server (RAS), for instance a SM-SR server.

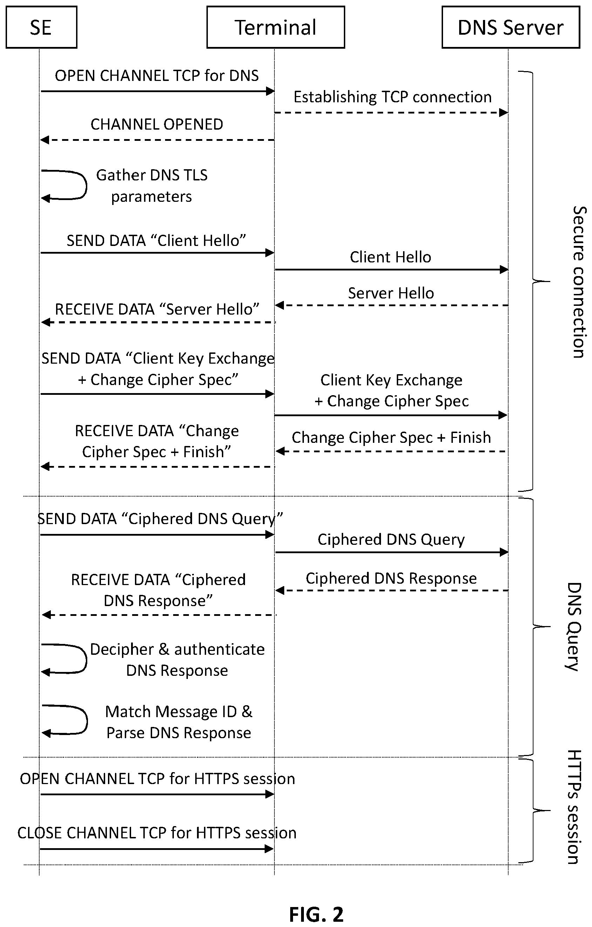

Figure 2 represents an example of a sequence flow of notifications for a secured DNS resolution according to one or several embodiments of the invention.

First, the SE may establish a secure communication link with the DNS server to retrieve the IP address of the RAS (this corresponds to the "Secure connection" part of Figure 2). In one or several embodiments, this secure communication link may be established based on PSK-TLS cipher suites, in a similar manner to what is provided in the Global Platform specification "Remote Application Management over HTTP - Amendment B v1.1.3" to establish secure HTTP sessions.

The establishment of the secure communication link between the SE and the DNS server may start by establishing a communication channel between the SE and the terminal ("OPEN CHANNEL TCP for DNS" in Figure 2). This may be performed by using a bearer independent protocol (BIP), according for instance to ETSI TS 102 223 V12.1.0. Terminal may notify the SE once the communication channel is established ("CHANNEL OPENED" in Figure 2).

Then, a connection may be established between the terminal and the DNS server, for instance by using the Transmission Control Protocol, TCP ("Establishing TCP connection" in Figure 2). This connection may be secured by using a cryptographic protocol, such as Transport Layer Security (TLS). In this case, the SE may support a set of cryptographic protocols dedicated to DNS (i.e. to be used to open secure DNS sessions), for instance PSK-TLS cipher suites.

Then, the SE (or, more precisely, the ISD-R (Issuer Security Domain-Root, which is the representative of the off-card entity SM-SR) of the SE) may negotiate the PSK-TLS handshake with the DNS server based on the set of cryptographic protocols dedicated to secure DNS sessions, as described for instance in IETF RFC 4279 and IETF RFC 5487. To do so, the SE may first obtain TLS parameters for securing the connection with the DNS server ("Gather DNS TLS parameters" in Figure 2). Then, a classical PSK Key exchange algorithm may be performed based on the TLS parameters ("Client Hello", "Server Hello", "Client Key Exchange", "Change Cipher Spec" and "Finish" messages in Figure 2).

For example, the TLS handshake may comprise:
- Exchanging "hello" messages to agree on algorithms, exchange random values, and check for session resumption;
- Exchanging the necessary cryptographic parameters to allow the client (e.g. SE) and server (e.g. DNS server) to agree on a premaster secret;
- Exchange certificates and cryptographic information to allow the client and server to authenticate themselves;
- Generate a master secret from the premaster secret and exchanged random values;
- Provide security parameters to the record layer;
- Allow the client and server to verify that their peer has calculated the same security parameters and that the handshake occurred without tampering by an attacker.

After the TLS handshake is complete, the communication link between the SE and the DNS server is secure, so that all future DNS queries and answers sent on this communication link are ciphered by keys derived from the cryptographic protocols dedicated to secure DNS sessions.

Then, in "DNS Query" part in Figure 2, a ciphered DNS query may be sent from the SE to the DNS server, or more precisely a command may be sent from the SE to the terminal ("SEND DATA "Ciphered DNS Query"" in Figure 2), and the DNS query may be sent from the terminal to the DNS server on the secure TCP channel ("Ciphered DNS Query" in Figure 2). For example, the DNS query may request the IP address of the RAS. The DNS server may then respond to this query, for example by sending to the terminal a ciphered message including data relative to the requested IP address ("Ciphered DNS Response" in Figure 2) and the terminal may send to the SE the ciphered message including data relative to the requested IP address ("RECEIVE DATA "Ciphered DNS Response"" in Figure 2).

Also belonging to "DNS Query" part in Figure 2, the DNS response received may then be deciphered and authenticated by the SE, based on the cryptographic protocols dedicated to secure DNS sessions ("Decipher & authenticate DNS Response" in Figure 2). The message ID of the DNS response may be compared to the message ID of the DNS query sent, and if the message IDs match the DNS response may be parsed by the SE ("Match Message ID & Parse DNS Response" in Figure 2). In particular, the parsing of the DNS response may comprise extracting the payload of the message, and determining from the payload the IP address of the RAS.

A second communication link may then be established between the SE and the Remote Administration Server (RAS), which can be the same as the DNS server, or be another server than the DNS server. It is noted that this second communication link is independent from the first communication link established for the secure DNS session. The second communication link is dedicated to an HTTP session and may use the retrieved IP address (IP address requested by the DNS query).

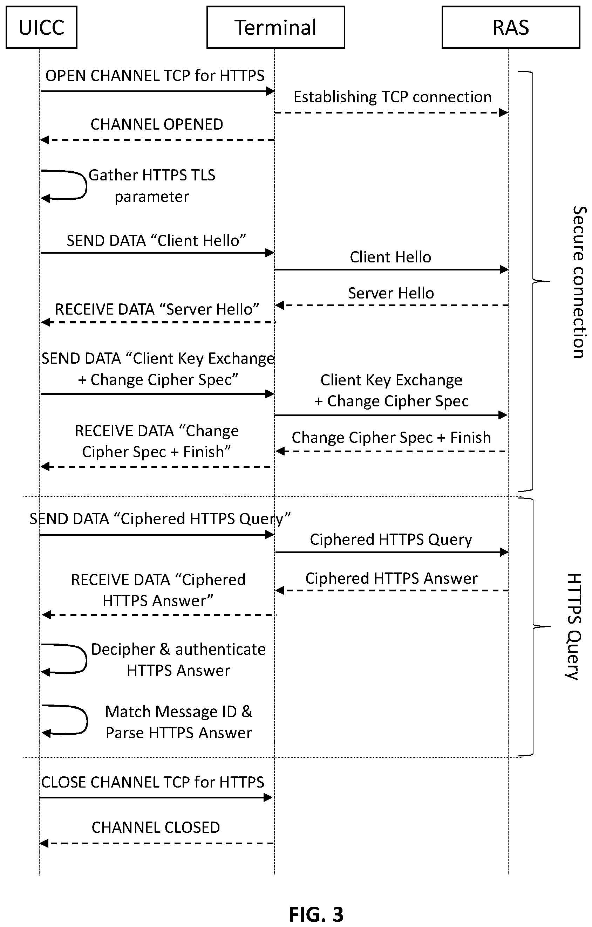

In one or several embodiments, the second communication link may be a secure channel, established in a similar manner that the first communication link established for the secure DNS session. Such embodiments are represented in Figure 3, which represents a sequence flow of notifications over HTTPs according to the GSMA technical specification "Remote Provisioning Architecture for Embedded UICC", Version 4.2, released on July 7, 2020.

Once the second communication link is established ("OPEN CHANNEL TCP for HTTPs session" in Figure 2), HTTP (or HTTPs if the communication is secured) queries may be processed, as in Figure 3 described below. Then, the second communication link may be closed ("CLOSE CHANNEL TCP for HTTPs session" in Figure 2). These sequences belong to "HTTPs session" part in Figure 2.

It is noted that, at this stage, the first communication link established for the secure DNS session may still be open. Indeed, to reduce power consumption of the Secure Element (SE), the invention proposes to reuse a same secure channel for several DNS queries. It is therefore proposed to define a threshold corresponding to a maximum number of DNS queries that can be processed on the same secure channel (e.g. value set and coding, for instance, to 2 or 4 or 8 or 16 or 32 or greater). Typically a default threshold value is set during a SE personalization step or updated by using of Over The Air (OTA) mechanisms (e.g. HTTPs Push SMS (Hyper Text Transfer Protocol Secure Push Short Message Service)). The new proposed threshold parameter may be included into HTTPs administration parameters. Once this maximum number is reached, the secure DNS session may be closed, i.e. the communication channel previously opened for DNS resolutions may be closed, and a new secure communication channel is opened when a new DNS resolution needs to be performed. By reusing the same secure communication link for more than one DNS query, TLS handshake is not repeated for each new DNS query, therefore reducing the power consumption on the SE.

In one or several embodiments, it is possible to use a "PDN Reuse" ("PDN" standing for "Packet Data Network") function when requesting the BIP session closure between the SE and the terminal, without requesting the secure communication link between the terminal and the DNS server to be closed. In the present disclosure, the term "PDN reuse" corresponds to the reuse process described in the ETSI TS 102 223 V12.1.0. Therefore, the TCP establishment is not repeated for each new DNS query, therefore further reducing the power consumption on the SE. The closing of the BIP channel may be performed, for example, after each DNS query and before establishing the secure connection for HTTPs session (if the number of requests processed during the current secure DNS session is less than or equal to the threshold, otherwise the session may be simply closed).

It is noted that other cryptographic protocols than TLS may be used for securing the communication links for DNS and/or HTTPs sessions, for instance Datagram Transport Layer Security (DTLS). Implementations of DNS over DTLS may be performed according to IETF RFC 8094.

Figure 3 represents an example of a sequence flow of notifications over HTTPs in one or several embodiments of the invention. Figure 3 actually details an example of an HTTPs session according to the GlobalPlatform specification "Remote Application Management over HTTP - Amendment B v1.1.3".

First, a communication channel may be established between the SE and the terminal ("OPEN CHANNEL TCP for HTTPS" in Figure 3), by using the bearer independent protocol (BIP).

Then, a connection may be established between the terminal and the Remote Administration Server (RAS), for instance by using the Transmission Control Protocol, TCP ("Establishing TCP connection" in Figure 3). This connection may be secured by using a cryptographic protocol, such as Transport Layer Security (TLS). In this case, the SE may also support a set of cryptographic protocols dedicated to HTTPs (i.e. to be used to open secure HTTP sessions as named HTTPs), for instance PSK-TLS cipher suites.

Then, the SE may negotiate the PSK-TLS handshake with the RAS based on the set of cryptographic protocols dedicated to HTTPs sessions, as previously described with reference to Figure 2, in the context of DNS. After this TLS handshake, the communication link between the SE and the RAS is secure.

Then, a ciphered HTTPs query may be sent from the SE to the RAS. The HTTPs response received from the RAS may then be deciphered and authenticated by the SE, based on the cryptographic protocols dedicated to HTTPs sessions. The message ID of the HTTPs response may be compared to the message ID of the HTTPs query sent, and if the message IDs match, the HTTPs response may be parsed by the SE. Then, the SE may send a request to the terminal to close the HTTPs session ("CLOSE CHANNEL TCP for HTTPs" in Figure 3), and the secure channel between the SE and the RAS may be closed.

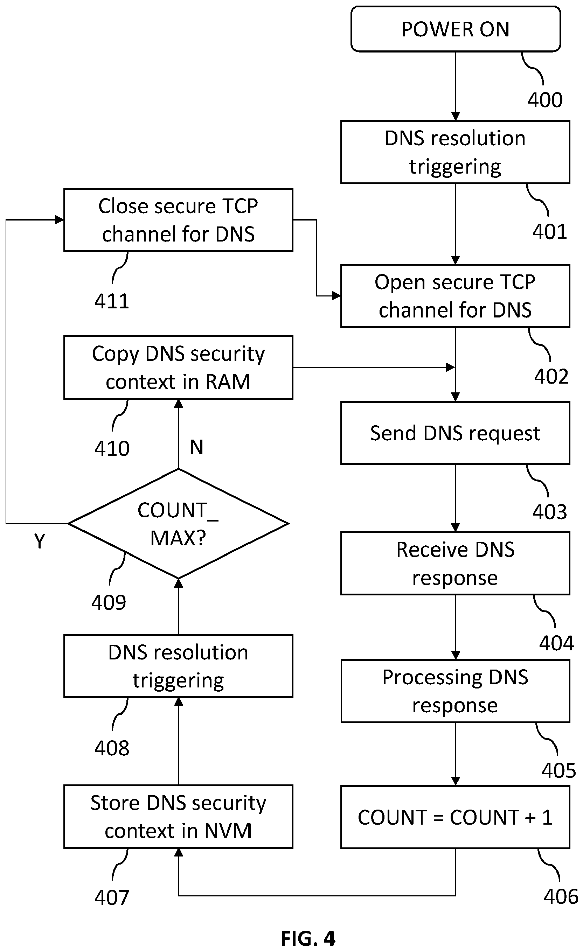

Figure 4 is a flow chart describing a data update in one or several embodiments of the invention.

At step 400, the terminal 100, 100' may be powered on. Then, at step 401, the terminal may receive a request for triggering a DNS resolution. For instance, this triggering request may be part of a request to set up a communication link between the Secure Element (SE) and an external Remote Administration Server (RAS), which requires first to retrieve (i.e. "resolve") the IP address of the RAS. The triggering of a DNS resolution is detailed in GSMA technical specification "Remote Provisioning Architecture for Embedded UICC", Version 4.2, released on July 7, 2020. For instance, at step 401, the SE may determine that DNS resolution of RAS IP address is needed based on criteria defined in section 2.4.5.1 of this specification, namely:
- the SE is requested to open an HTTPs session; and
- the ISD-R has no IP address configured in the Connection Parameters of its Administration Session Triggering Parameters nor in the Administration Session Triggering SMS that may have triggered the session; and
- the ISD-R has a FQDN (Fully Qualified Domain Name), and IP addresses of DNS servers, configured in DNS parameters; and
- the ISD-R has not already resolved the FQDN to an IP address, or has resolved it but has reasons to consider the resolved value is stale.

Then, at step 402, a secure channel may be open between the SE 101, 101' and a remote DNS server, as described for instance with reference to Figure 2. At the opening of the secure channel, a counter (stored for example in a memory of the SE or of the terminal) may be initialized to an initial value, for example zero. This counter is used to count the number of DNS queries processed during the (same) secure DNS session associated with the secure channel.

It is noted that the secure channel established between the SE and the DNS server is associated with a security context conventionally stored in the RAM 103, 103' of the SE 101, 101', called DNS security context. According to embodiments, the DNS security context may comprise parameters associated with the secure DNS session and the corresponding secure channel, including parameters of the TLS handshake, for example one or several parameters among:
- the Client and Server Random Values;
- the server's session identifier (ID) and the agreed Cipher Suite (retrieved from "Server Hello" message);
- the PSK ID (retrieved from the "Client Key Exchange");
- mutually computed cryptographic values, such as the Client and Server Write MAC Secret, the Client and Server Write Key or the Client and Server Write Initialization Vector (IV);
- etc.

In particular, the DNS security context may comprise the parameters for implementing a so-called session resumption. It is recalled that a session resumption corresponds to a mechanism to share, between the client and the server, same negotiated secret data between multiple connections, making it possible to perform an abbreviated handshake for future data exchanges. In other words, when establishing the connection (step 402), a full handshake is performed and some negotiated shared data is saved at the server and client side. Then, the session is suspended (e.g. to open an HTTPs session). Then, the secure DNS session can be resumed by performing an abbreviated handshake based on the previously recorded data.

For example, when both the SE and the DNS server support TLS Protocol Version 1.3, the TLS session resumption may be implemented with a PSK identity that corresponds to a unique key derived from the initial handshake. The client may use this PSK for future handshakes by including the ticket value in the "pre_shared_key" extension in its ClientHello. Such implementation is described in IETF RFC 8446. Alternatively, if the SE or the server does not support TLS Protocol Version 1.3, TLS session resumption may be implemented with session identifiers or session tickets mechanisms, as described in IETF RFC 5077.

At steps 403 and 404, a ciphered DNS request may be sent from the SE 101, 101' to the DNS server and a ciphered response may be received at the SE 101, 101' from the DNS server, as described above with reference to Figure 2.

The ciphered DNS response may then be processed at step 405. This processing may comprise, in an illustrative and non-limiting manner, deciphering, authenticating, parsing the ciphered DNS response received, and storing the requested IP address.

The count may then be increased, for example by one unit, at step 406.

At an optional step 407, the secure DNS session may be suspended and the DNS security context of the secure DNS session may be copied from the RAM 103, 103' of the SE 101, 101' to the NVM 105, 105'. The DNS security context may then be cleared from the RAM 103, 103' of the SE 101, 101'. Indeed, the RAM is the most costly resource in SE, and storing both DNS security context and subsequent HTTPs security context (associated with a subsequent HTTPs session) may represent a memory cost that is much too high. Therefore, it is particularly advantageous, in terms of RAM resources, to keep only one security context at a time in the RAM. This is possible because the TLS sessions for DNS and for HTTPs are usually opened sequentially and not simultaneously: a DNS TLS session may be opened to retrieve an IP address, then closed (and related security context only cleared from RAM) or suspended (if suspended then DNS security context is store in NVM and cleared from RAM), and then an HTTPs session may be opened based on the retrieved IP address.

After step 407, an HTTPs session may be implemented as in Figure 3. In one or several embodiments, a secure TCP channel may be opened for the HTTPs session. Then, HTTPs requests may be sent from the SE to the RAS, and HTTPs responses may be received from the RAS by the SE in response to these HTTPs requests. After HTTPs responses are processed, the HTTPs session may be closed and the related security context may be cleared from the RAM.

Then, at step 408, the SE may receive (or determine) a subsequent DNS resolution triggering, similarly as in step 401. It is therefore checked (step 409) whether the counter of the current secure DNS session exceeds the predefined threshold.

If the counter exceeds the threshold (arrow "Y" of step 409), e.g. the counter is strictly greater than the threshold, the current secure channel associated to the current DNS may be closed (step 411) and a new secure channel may be open (step 402). The previous DNS security context may be cleared and replaced by the new DNS security context.

If the counter does not exceed the threshold (arrow "N" of step 409), e.g. the counter is lower than or equal to the threshold, the DNS security context may be copied in the RAM (optional step 410, performed when optional step 407 is implemented), and the secure DNS session may be resumed. The DNS request associated with the received DNS resolution triggering (step 408) may then be sent on the resumed channel (step 403).

Implementation variants are possible. For instance, another test on the counter value can be performed before step 407: if the counter exceeds the threshold, the current secure channel associated to the current DNS may be closed and there is no copy of the DNS security context in the NVM. Also, steps 409-410 or 409-411 may be performed before step 408.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the invention.

## Claims

1. A method performed at a terminal for communicating with a remote Domain Name System server, DNS server, wherein a secure connection is established between a secure element of the terminal and the remote DNS server,
wherein the secure connection is associated with a counter representative of a number of DNS requests already sent on the secure connection,
the method comprising:
as long as the value of the counter is less than or equal to a threshold, iteratively performing:
receiving a DNS resolution triggering request;
upon receiving the resolution triggering request, sending a ciphered DNS request to the remote DNS server via the secure connection;
receiving, from the remote DNS server, a ciphered DNS response in response to the sent DNS request via the secure connection;
processing the ciphered DNS response received;
increasing the value of the counter;
and when the value of the counter is greater than the threshold, closing the secure connection.

2. The method of claim 1, wherein the secure element is a universal integrated circuit card, UICC, or an embedded UICC, eUICC.

3. The method of claim 1 or 2, wherein the secure connection is established on a Transmission Control Protocol, TCP, channel between the terminal and the remote DNS server.

4. The method of any one of claims 1 to 3, wherein the secure connection is secured by dedicated cryptographic protocols, wherein the dedicated cryptographic protocols comprise Transport Layer Security pre-shared key, TLS-PSK, cipher suites.

5. The method of any one of claims 1 to 4, wherein the secure connection is secured by dedicated cryptographic protocols, wherein the ciphered DNS request and the ciphered DNS response are ciphered by keys derived from the dedicated cryptographic protocols.

6. The method of any one of claims 1 to 5, wherein the secure connection is established upon receiving an initial DNS resolution triggering request.

7. The method of any one of claims 1 to 6, wherein the secure connection is secured by dedicated cryptographic protocols, wherein the secure connection between the secure element and the remote DNS server is associated with a DNS security context currently stored in a Random-access memory, RAM, of the secure element,
the DNS security context comprising keys derived from the dedicated cryptographic protocols to be used for ciphering the DNS requests and the DNS responses.

8. The method of claim 7, wherein, for at least one received DNS resolution triggering request, the method further comprises:
after processing the ciphered DNS response corresponding to the at least one received DNS resolution triggering request, storing a copy of the DNS security context in a non-volatile memory, NVM, and clearing the DNS security context from the RAM.

9. The method of claim 8, wherein the NVM is external to the secure element.

10. The method of any one of claims 8 and 9, further comprising:
upon receiving a subsequent DNS resolution triggering request, copying the DNS security context from the NVM to the RAM, and sending the ciphered DNS request to the remote DNS server via the secure connection based on the copied DNS security context of the RAM.

11. The method of any one of claims 1 to 10, wherein one of the DNS resolution triggering requests is part of a request to open an HTTPs session.

12. The method of claim 11, wherein the ciphered DNS request is a request to retrieve an IP address of a Remote Administration Server, RAS, to be used to open the HTTPs session.

13. The method of claim 12, wherein the secure connection between the secure element of the terminal and the remote DNS server is called first secure connection, the method further comprising:
establishing a secure connection, called second secure connection, between the secure element and the Remote Administration Server;
sending a ciphered HTTPs request to the Remote Administration Server via the second secure connection;
receiving, from the Remote Administration Server, a ciphered HTTPs response in response to the sent ciphered HTTPs request via the secure channel;
processing the ciphered HTTPs response received; and
after processing the ciphered HTTPs response, closing the second secure connection.

14. The method of claim 13 in combination with claim 8, wherein establishing the second secure connection is performed after clearing the DNS security context from the RAM.

15. A terminal comprising a secure element, the secure element being configured for establishing a secure connection with external remote Domain Name System server, DNS server,
wherein the secure connection is associated with a counter representative of a number of DNS requests already sent on the secure connection,
the terminal being configured for:
as long as the value of the counter is less than or equal to a threshold, iteratively performing:
receiving a DNS resolution triggering request;
upon receiving the resolution triggering request, sending a ciphered DNS request to the remote DNS server via the secure connection;
receiving, from the remote DNS server, a ciphered DNS response in response to the sent DNS request via the secure connection;
processing the ciphered DNS response received;
increasing the value of the counter;
and when the value of the counter is greater than the threshold, closing the secure connection.

16. A non-transitory computer readable storage medium, having stored thereon a computer program comprising program instructions, the computer program being loadable into a data-processing unit and adapted to cause the data-processing unit to carry out each of the steps of any of claims 1 to 14 when the computer program is run by the data-processing device.

## Patentansprüche

1. Verfahren, das an einem Endgerät zum Kommunizieren mit einem entfernten Domain Name System-Server, DNS-Server, durchgeführt wird, wobei eine sichere Verbindung zwischen einem sicheren Element des Endgerätes und dem entfernten DNS-Server hergestellt wird,
wobei der sicheren Verbindung ein Zähler zugeordnet ist, der für eine Anzahl von DNS-Anforderungen repräsentativ ist, die bereits über die sichere Verbindung gesendet wurden,
wobei das Verfahren umfasst:
solange der Wert des Zählers kleiner oder gleich einem Schwellenwert ist, iterativ folgendes durchführen:
Empfangen einer Anforderung zum Auslösen einer DNS-Auflösung;
nach Empfangen der Anforderung zum Auslösen einer DNS-Auflösung, Senden einer verschlüsselten DNS-Anforderung an den entfernten DNS-Server über die sichere Verbindung;
Empfangen einer verschlüsselten DNS-Antwort von dem entfernten DNS-Server als Reaktion auf die über die sichere Verbindung gesendete DNS-Anforderung;
Verarbeiten der empfangenen verschlüsselten DNS-Antwort;
Erhöhen des Zählerwertes;
und wenn der Zählerwert größer als der Schwellenwert ist, Schließen der sicheren Verbindung.

2. Verfahren nach Anspruch 1, wobei das sichere Element eine universelle integrierte Schaltkreiskarte, UICC, oder eine eingebettete UICC, eUICC, ist.

3. Verfahren nach Anspruch 1 oder 2, wobei die sichere Verbindung über einen TCP-Kanal (TCP = Transmission Control Protocol) zwischen dem Endgerät und dem entfernten DNS-Server hergestellt wird.

4. Verfahren nach einem der Ansprüche 1 bis 3, wobei die sichere Verbindung durch dedizierte kryptografische Protokolle gesichert ist, wobei die dedizierten kryptografischen Protokolle Verschlüsselungssuiten des Transport Layer Security Pre-Shared Key, TLS-PSK, umfassen.

5. Verfahren nach einem der Ansprüche 1 bis 4, wobei die sichere Verbindung durch dedizierte kryptografische Protokolle gesichert ist, wobei die verschlüsselte DNS-Anforderung und die verschlüsselte DNS-Antwort durch Schlüssel verschlüsselt werden, die von den dedizierten kryptografischen Protokollen abgeleitet sind.

6. Verfahren nach einem der Ansprüche 1 bis 5, wobei die sichere Verbindung nach dem Empfangen einer ersten Anforderung zum Auslösen einer DNS-Auflösung hergestellt wird.

7. Verfahren nach einem der Ansprüche 1 bis 6, wobei die sichere Verbindung durch dedizierte kryptografische Protokolle gesichert ist, wobei die sichere Verbindung zwischen dem sicheren Element und dem entfernten DNS-Server einem DNS-Sicherheitskontext zugeordnet ist, der gegenwärtig in einem Direktzugriffsspeicher, RAM, des sicheren Elements gespeichert ist,
wobei der DNS-Sicherheitskontext Schlüssel umfasst, die von den dedizierten kryptografischen Protokollen abgeleitet sind, die zur Verschlüsselung der DNS-Anforderungen und der DNS-Antworten zu verwenden sind.

8. Verfahren nach Anspruch 7, wobei das Verfahren für mindestens eine empfangene Anforderung zum Auslösen einer DNS-Auflösung ferner umfasst:
nach dem Verarbeiten der verschlüsselten DNS-Antwort, die der zumindest einen Anforderung zum Auslösen einer DNS-Auflösung entspricht, Speichern einer Kopie des DNS-Sicherheitskontextes in einem nichtflüchtigen Speicher, NVM, und Löschen des DNS-Sicherheitskontextes aus dem RAM.

9. Verfahren nach Anspruch 8 , wobei der NVM außerhalb des sicheren Elements ist.

10. Verfahren nach einem der Ansprüche 8 und 9, ferner umfassend:
beim Empfangen einer nachfolgenden Anforderung zum Auslösen einer DNS-Auflösung, Kopieren des DNS-Sicherheitskontextes vom NVM in den RAM, und Senden der verschlüsselten DNS-Anforderung an den entfernten DNS-Server über die sichere Verbindung basierend auf dem kopierten DNS-Sicherheitskontext des RAM.

11. Verfahren nach einem der Ansprüche 1 bis 10, wobei eine Anforderung zum Auslösen einer DNS-Auflösung Teil einer Anforderung ist, eine HTTPs-Sitzung zu eröffnen.

12. Verfahren nach Anspruch 11, wobei die verschlüsselte DNS-Anforderung eine Anforderung ist, um eine IP-Adresse eines entfernten Verwaltungsservers, RAS, abzurufen, die zum Öffnen der HTTPs-Sitzung verwendet werden soll.

13. Verfahren nach Anspruch 12, wobei die sichere Verbindung zwischen dem sicheren Element des Endgerätes und dem entfernten DNS-Server als erste sichere Verbindung bezeichnet wird und das Verfahren ferner umfasst:
Herstellen einer sicheren Verbindung, der so genannten zweiten sicheren Verbindung, zwischen dem sicheren Element und dem entfernten Verwaltungsserver;
Senden einer verschlüsselten HTTPs-Anforderung an den entfernten Verwaltungsserver über die zweite sichere Verbindung;
Empfangen einer verschlüsselten HTTPs-Antwort von dem entfernten Verwaltungsserver als Reaktion auf die gesendete verschlüsselte HTTPs-Anforderung über den sicheren Kanal;
Verarbeiten der empfangenen verschlüsselten HTTPs-Antwort; und
nach dem Verarbeiten der verschlüsselten HTTPs-Antwort, Schließen der zweiten sicheren Verbindung.

14. Verfahren nach Anspruch 13 in Kombination mit Anspruch 8, wobei das Herstellen der zweiten sicheren Verbindung durchgeführt wird, nachdem der DNS-Sicherheitskontext aus dem RAM gelöscht wurde.

15. Endgerät, das ein sicheres Element umfasst, wobei das sichere Element dazu ausgelegt ist, eine sichere Verbindung mit einem externen entfernten Domain Name System-Server, DNS-Server, herzustellen,
wobei der sicheren Verbindung ein Zähler zugeordnet ist, der für eine Anzahl von DNS-Anforderungen repräsentativ ist, die bereits über die sichere Verbindung gesendet wurden,
wobei das Endgerät dazu ausgelegt ist:
solange der Wert des Zählers kleiner oder gleich einem Schwellenwert ist, iterativ folgendes durchführen:
Empfangen einer Anforderung zum Auslösen einer DNS-Auflösung;
nach Empfangen der Anforderung zum Auslösen einer DNS-Auflösung, Senden einer verschlüsselten DNS-Anforderung an den entfernten DNS-Server über die sichere Verbindung; Empfangen einer verschlüsselten DNS-Antwort von dem entfernten DNS-Server als Reaktion auf die über die sichere Verbindung gesendete DNS-Anforderung;
Verarbeiten der empfangenen verschlüsselten DNS-Antwort;
Erhöhen des Zählerwertes;
und wenn der Zählerwert größer als der Schwellenwert ist, Schließen der sicheren Verbindung.

16. Nichtflüchtiges computerlesbares Speichermedium, auf dem ein Computerprogramm gespeichert ist, das Programmanweisungen umfasst, wobei das Computerprogramm in eine Datenverarbeitungseinheit geladen werden kann und angepasst ist, um die Datenverarbeitungseinheit zu veranlassen, jeden der Schritte nach einem der Ansprüche 1 bis 14 durchzuführen, wenn das Computerprogramm von der Datenverarbeitungsvorrichtung ausgeführt wird.

## Revendications

1. Procédé réalisé au niveau d'un terminal pour communiquer avec un serveur de système de noms de domaine, serveur DNS, à distance, dans lequel une connexion sécurisée est établie entre un élément sécurisé du terminal et le serveur DNS à distance,
dans lequel la connexion sécurisée est associée à un compteur représentatif d'un nombre de requêtes DNS déjà envoyées sur la connexion sécurisée,
le procédé comprenant :
tant que la valeur du compteur est inférieure ou égale à un seuil, la réalisation de façon itérative de :
la réception d'une requête de déclenchement de résolution DNS ;
suite à la réception de la requête de déclenchement de résolution, l'envoi d'une requête DNS chiffrée sur le serveur DNS à distance via la connexion sécurisée ;
la réception, en provenance du serveur DNS à distance, d'une réponse DNS chiffrée en réponse à la requête DNS envoyée via la connexion sécurisée ;
le traitement de la réponse DNS chiffrée reçue ;
l'augmentation de la valeur du compteur ;
et dans lequel, lorsque la valeur du compteur est supérieure au seuil, la fermeture de la connexion sécurisée.

2. Procédé selon la revendication 1, dans lequel l'élément sécurisé est une carte à circuit intégré universel, UICC, ou une UICC intégrée, eUICC.

3. Procédé selon la revendication 1 ou 2, dans lequel la connexion sécurisée est établie sur un canal de protocole de commande de transmission, TCP, entre le terminal et le serveur DNS à distance.

4. Procédé selon l'une quelconque des revendications 1 à 3, dans lequel la connexion sécurisée est sécurisée par des protocoles cryptographiques dédiés, dans lequel les protocoles cryptographiques dédiés comprennent des suites de chiffrement à clé(s) prépartagée(s) de sécurité de couche de transport, TLS-PSK.

5. Procédé selon l'une quelconque des revendications 1 à 4, dans lequel la connexion sécurisée est sécurisée par des protocoles cryptographiques dédiés, dans lequel la requête DNS chiffrée et la réponse DNS chiffrée sont chiffrées au moyen de clés qui sont dérivées à partir des protocoles cryptographiques dédiés.

6. Procédé selon l'une quelconque des revendications 1 à 5, dans lequel la connexion sécurisée est établie suite à la réception d'une requête de déclenchement de résolution DNS initiale.

7. Procédé selon l'une quelconque des revendications 1 à 6, dans lequel la connexion sécurisée est sécurisée par des protocoles cryptographiques dédiés, dans lequel la connexion sécurisée entre l'élément sécurisé et le serveur DNS à distance est associée à un contexte de sécurité DNS présentement stocké dans une mémoire vive, RAM, de l'élément sécurisé,
le contexte de sécurité DNS comprenant des clés dérivées à partir des protocoles cryptographiques dédiés à utiliser pour chiffrer les requêtes DNS et les réponses DNS.

8. Procédé selon la revendication 7, dans lequel, pour au moins une requête de déclenchement de résolution DNS reçue, le procédé comprend en outre :
après le traitement de la réponse DNS chiffrée correspondant à l'au moins une requête de déclenchement de résolution DNS reçue, le stockage d'une copie du contexte de sécurité DNS dans une mémoire non volatile, NVM, et la suppression du contexte de sécurité DNS au niveau de la RAM.

9. Procédé selon la revendication 8, dans lequel la NVM est externe par rapport à l'élément sécurisé.

10. Procédé selon l'une quelconque des revendications 8 et 9, comprenant en outre :
suite à la réception d'une requête de déclenchement de résolution DNS subséquente, la copie du contexte de sécurité DNS depuis la NVM dans la RAM, et l'envoi de la requête DNS chiffrée sur le serveur DNS à distance via la connexion sécurisée sur la base du contexte de sécurité DNS copié de la RAM.

11. Procédé selon l'une quelconque des revendications 1 à 10, dans lequel l'une des requêtes de déclenchement de résolution DNS est une partie d'une requête pour ouvrir une session HTTP.

12. Procédé selon la revendication 11, dans lequel la requête DNS chiffrée est une requête pour extraire une adresse IP d'un serveur d'administration à distance, RAS, à utiliser pour ouvrir la session HTTP.

13. Procédé selon la revendication 12, dans lequel la connexion sécurisée entre l'élément sécurisé du terminal et le serveur DNS à distance est appelée première connexion sécurisée, le procédé comprenant en outre :
l'établissement d'une connexion sécurisée, appelée seconde connexion sécurisée, entre l'élément sécurisé et le serveur d'administration à distance ;
l'envoi d'une requête HTTP chiffrée sur le serveur d'administration à distance via la seconde connexion sécurisée ;
la réception, en provenance du serveur d'administration à distance, d'une réponse HTTP chiffrée en réponse à la requête HTTP chiffrée envoyée via le canal sécurisé ;
le traitement de la réponse HTTP chiffrée reçue ; et
après le traitement de la réponse HTTP chiffrée, la fermeture de la seconde connexion sécurisée.

14. Procédé selon la revendication 13 en combinaison avec la revendication 8, dans lequel l'établissement de la seconde connexion sécurisée est réalisé après la suppression du contexte de sécurité DNS au niveau de la RAM.

15. Terminal comprenant un élément sécurisé, l'élément sécurisé étant configuré pour établir une connexion sécurisée avec un serveur de système de noms de domaine, serveur DNS, à distance externe,
dans lequel la connexion sécurisée est associée à un compteur représentatif d'un nombre de requêtes DNS déjà envoyées sur la connexion sécurisée,
le terminal étant configuré pour :
tant que la valeur du compteur est inférieure ou égale à un seuil, réaliser de façon itérative :
la réception d'une requête de déclenchement de résolution DNS ;
suite à la réception de la requête de déclenchement de résolution, l'envoi d'une requête DNS chiffrée sur le serveur DNS à distance via la connexion sécurisée ;
la réception, en provenance du serveur DNS à distance, d'une réponse DNS chiffrée en réponse à la requête DNS envoyée via la connexion sécurisée ;
le traitement de la réponse DNS chiffrée reçue ;
l'augmentation de la valeur du compteur ;
et dans lequel, lorsque la valeur du compteur est supérieure au seuil, la fermeture de la connexion sécurisée.

16. Support de stockage lisible par ordinateur non transitoire, comportant, stocké en son sein, un programme informatique comprenant des instructions de programme, le programme informatique pouvant être chargé dans une unité de traitement de données et adapté pour forcer l'unité de traitement de données à mettre en œuvre chacune des étapes selon l'une quelconque des revendications 1 à 14 lorsque le programme informatique est exécuté par le dispositif de traitement de données.
